(19) Europäisches Patentamt
European Patent Office
Office européen des brevets

(11) **EP 4 394 049 A1**

(12) **EUROPEAN PATENT APPLICATION**
published in accordance with Art. 153(4) EPC

(43) Date of publication:
**03.07.2024 Bulletin 2024/27**

(21) Application number: **22923034.7**

(22) Date of filing: **25.02.2022**

(51) International Patent Classification (IPC):
**C21B 7/10** $^{(2006.01)}$ **C21B 7/00** $^{(2006.01)}$
**G06F 119/08** $^{(2020.01)}$ **G06F 119/00** $^{(2020.01)}$

(86) International application number:
**PCT/CN2022/078015**

(87) International publication number:
**WO 2023/142213 (03.08.2023 Gazette 2023/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.01.2022 CN 202210100899**

(71) Applicants:
• **Institute Of Research Of Iron And Steel,
Jiangsu Province/Sha-Steel, Co. Ltd (CN)
Suzhou, Jiangsu 215625 (CN)**
• **Jiangsu Shagang Steel Co., Ltd.
Suzhou, Jiangsu 215625 (CN)**

(72) Inventors:
• **ZHAO, Huatao**
Suzhou, Jiangsu 215625 (CN)
• **DU, Ping**
Suzhou, Jiangsu 215625 (CN)
• **ZHANG, Shaobo**
Suzhou, Jiangsu 215625 (CN)
• **ZHU, Hua**
Suzhou, Jiangsu 215625 (CN)
• **ZHU, Degui**
Suzhou, Jiangsu 215625 (CN)

(74) Representative: **Gille Hrabal
Partnerschaftsgesellschaft mbB
Patentanwälte
Brucknerstraße 20
40593 Düsseldorf (DE)**

(54) **BLAST FURNACE EDGE AIRFLOW STABILITY CONTROL METHOD**

(57) A method for controlling stability of gas flow at the periphery of a blast furnace, including the following steps: constructing a database; and selecting blast furnace operating parameters satisfying a first preset condition from the database to generate an instruction for setting the blast furnace operating parameters for a next operating stage. The first preset condition includes: PD<a preset value PD0, and the blast furnace operation parameters corresponding to a minimum value of PU are selected when the condition is satisfied.

FIG. 1

EP 4 394 049 A1

**Description**

**TECHNICAL FIELD**

The present disclosure belongs to the technical field of control of smelting blast furnaces, and relates to a method for controlling stability of gas flow at the periphery of a blast furnace.

**BACKGROUND**

Cooling staves are a commonly used form of coolers in blast furnaces at present, and are located on inner sides of blast furnace shells. Cooling water is bumped into the cooling stave and allowed to flow in the cooling stave, so that heat exchange occurs in a blast furnace to cool the blast furnace and prevent high-temperature heat flow from directly reaching a furnace shell. Cohesive zones in the blast furnace are mainly located in the areas such as the belly, the shaft and the lower areas of the stack. The cooling staves in these areas bear the impact of high-temperature heat load inside the blast furnace. Drastic temperature changes, erosion from high-temperature liquid slag and iron, scouring abrasion from furnace charge and gas flow, as well as erosion from alkali metals and CO, can all cause damage to the cooling staves. The blast furnace generally includes more than ten layers of cooling staves from the hearth to the throat. To prolong the service life of cooling staves in the areas such as the belly, the shaft and the lower areas of the furnace body, copper cooling staves with good thermal conductivity and impact resistance are usually used in the $1^{st}$ to $9^{th}$ sections, while cast iron cooling staves with good wear resistance are used in the $10^{th}$ to $12^{th}$ sections.

However, during operation of the blast furnace, there are often abnormal furnace conditions such as accretion of the blast furnace wall or appearance of channels in the blast furnace. Accretion of the blast furnace wall refers to sticking of block or fine materials to the cooling staves, which can affect the cooling effect of the cooling staves in that section, and result in failure to timely reduce high temperature in the blast furnace. The appearance of channels in the blast furnace refers to the formation of gas flow channels due to the appearance of cavities on the charge level of the blast furnace, resulting in a significant increase in temperature in a local area of the blast furnace. At the periphery of a blast furnace, one of the manifestations of these abnormal conditions is that gas flow at the periphery of the blast furnace fluctuates greatly and seriously affects smooth running of the blast furnace. Therefore, these abnormal furnace conditions need control and adjustment to ensure smooth running of the blast furnace.

**SUMMARY**

The objective of the present disclosure is to provide a method for controlling stability of gas flow at the periphery of a blast furnace, which solves the problem that large fluctuations in the gas flow at the periphery of the blast furnace affect smooth running of the blast furnace in the prior art.

To achieve the above objective, an implementation of the present disclosure provides the method for controlling stability of gas flow at the periphery of a blast furnace, including the following steps:

constructing a database of blast furnace operating parameters, the database including the number of gas flow peaks of lower part of the blast furnace PD, the number of gas flow peaks of upper part of the blast furnace PU, blast furnace feed, a distribution system, an air supply system and a cooling system collected in production history; and selecting the blast furnace operating parameters satisfying a first preset condition from the database to generate an instruction for setting the blast furnace operating parameters for a next operating stage;

where the first preset condition includes: the number of gas flow peaks of lower part of the blast furnace PD<a preset value PD0, and the blast furnace operating parameters corresponding to a minimum value of the number of gas flow peaks of upper part of the blast furnace PU are selected when the condition PD<PD0 is satisfied;

where a statistical method for the number of gas flow peaks of lower part of the blast furnace PD and the number of gas flow peaks of upper part of the blast furnace PU is as follows:

calculating a correlation coefficient $R_k$ between a standard deviation of temperature $\Delta T_k$ of the $k^{th}$ cooling stave and a standard deviation of heat load of the blast furnace $\Delta TL$ respectively, where k=5, 6, ..., 12; counting the number of gas flow peaks, corresponding to a section of cooling stave with the highest correlation coefficient $R_k$ in the $5^{th}$ to $9^{th}$ sections of cooling staves, as the number of gas flow peaks of lower part of the blast furnace PD; and counting the number of gas flow peaks, corresponding to a section of cooling stave with the highest correlation coefficient $R_k$ in the $10^{th}$ to $12^{th}$ sections of cooling staves, as the number of gas flow peaks of upper part of the blast furnace PU.

As a further improvement of an implementation of the present disclosure, the step "constructing a database of blast furnace operating parameters" specifically includes: dividing the statistically obtained number of gas flow peaks of lower part of the blast furnace PD into different grades in order of magnitude, to obtain the number of gas flow peaks of lower part of the blast furnace PD in different ranges, and taking average values of the blast furnace operating parameters in a same grade; and

the first preset condition includes: a maximum value in a range of the grade of the number of gas flow peaks of lower part of the blast furnace PD<a preset value PD0, and the average value of the blast furnace operating parameters corresponding to the minimum value of the number of gas flow peaks of upper part of the blast furnace PU is selected when the condition is satisfied.

As a further improvement of an implementation of the present disclosure, the correlation coefficient $R_k$ between the standard deviation of temperature $\Delta T_k$ of the $k^{th}$ cooling stave and the standard deviation of heat load of the blast furnace $\Delta TL$ is calculated by the following equation:

$$R_{\mathrm{k}} = \frac{Cov(\Delta T_k, \Delta TL)}{\sqrt{Var(\Delta T_k) \cdot Var(\Delta TL)}},$$

where $Cov(\Delta T_k, \Delta TL)$ is a sample covariance of $\Delta Tk$ and $\Delta TL$ in several units of time within a preset time, $Var(\Delta T_k)$ is a variance of $\Delta T_k$ in several units of time within a preset time, and $Var(\Delta TL)$ is a variance of $\Delta TL$ in several units of time within a preset time.

As a further improvement of an implementation of the present disclosure, the standard deviation of temperature of the $k^{th}$ cooling stave $\Delta T_k$ is calculated by the following equation:

$$\Delta T_{\mathrm{k}} = \sum_{j=1}^{m} \sqrt{\frac{1}{n-1} \sum_{i=1}^{n} (T_i - \overline{T})^2},$$

where m is the number of temperature collection points on the $k^{th}$ cooling stave, j=1, ..., m, $T_i$ is the $i^{th}$ temperature data of a temperature collection point on the $k^{th}$ cooling stave, n is the number of temperature samples in unit time, i=1, ..., n, and $\overline{T}$ is an average temperature in unit time.

As a further improvement of an implementation of the present disclosure, the temperature of the cooling stave is collected by thermocouples arranged on the cooling stave, and a sample dataset is subjected to removal of outliers and removal of data under unstable working conditions to obtain a final processed sample dataset.

As a further improvement of an implementation of the present disclosure, the standard deviation of heat load of the cooling stave $\Delta TL = \sqrt{\frac{1}{n-1} \sum_{i=1}^{n} (TL_i - \overline{TL})^2}$ , where $TL_i$ is the heat load of the blast furnace when the $i^{th}$ temperature data is collected, n is the number of heat load samples in unit time, i=1, ..., n, and $\overline{TL}$ is average heat load in unit time.

As a further improvement of an implementation of the present disclosure, the heat load of the blast furnace $TL_i$ = c·F($T_{out}$ - $T_{in}$),

where c is specific heat capacity of water, F is a flow rate of cooling water in the cooling stave, $T_{out}$ is an outlet water temperature of the cooling stave, and $T_{in}$ is an inlet water temperature of the cooling stave.

As a further improvement of an implementation of the present disclosure, the statistical method for the number of gas flow peaks includes:

collecting multiple temperature data of the cooling stave, the multiple temperature data being sorted by collection time;
removing interference temperature data from the multiple temperature data, and determining several analytical temperature data;
performing moving average processing on respective analytical temperature data in order according to the determination order of the several analytical temperature data; and
counting the number of gas flow peaks based on the respective analytical temperature data $T_p$ subjected to the moving average processing, and defining the temperature data satisfying both a second preset condition and a third preset condition as one gas flow peak, where the number of gas flow peaks of each section of cooling stave is a sum of the number of gas flow peaks at multiple temperature collection points on the cooling stave in a preset time;

the second preset condition is: $T_p > T_{p-1}$ and $T_p < T_{p+1}$, where $T_{p-1}$, $T_p$ and $T_{p+1}$ are the $(p-1)^{th}$ $p^{th}$ and $(p+1)^{th}$ analytical temperature data respectively; and

the third preset condition is: the analytical temperature data of the $5^{th}$ to $9^{th}$ cooling staves satisfy $T_p/\overline{T} > 1.05$, or the analytical temperature data of the $10^{th}$ to $12^{th}$ cooling staves satisfy $T_p/\overline{T} > 1$, where $\overline{T}$ is an average temperature in unit time.

As a further improvement of an implementation of the present disclosure, the moving average processing includes:

creating a moving window of a preset step size, and according to the set step size, starting from a first temperature data among the several analytical temperature data, moving forward in the order of collection time until a last temperature data enters the moving window; and

after each time of moving, taking an average value of temperature data in the moving window as the analytical temperature data of an intermediate collection point in the moving window, in order to obtain several analytical temperature data after several times of moving.

As a further improvement of an implementation of the present disclosure, the interference temperature data include: continuous multiple constant temperature data, temperature data outside a preset range ($T_{min}$, $T_{max}$), as well as temperature data in 2 hours before opening, during opening and in 2 hours after closing of a back-drafting valve.

As a further improvement of an implementation of the present disclosure, the blast furnace feed parameters include Zn content, alkali metal content and sintered fine ore percentage in the blast furnace feed;

the distribution system parameters include a maximum tilting angle, charge level height and peripheral load O/C, where O is the number of ore circles in the two outermost grades/ (the total number of ore circles × batch ore charge), and C is the number of coke circles in the two outermost grades/ (the total number of coke circles × batch coke charge);

the air supply system includes tuyere area, tuyere length, blast volume and oxygen content; and

the cooling system includes an inlet water temperature and a flow rate of cooling water in the cooling stave.

Compared with the prior art, the present disclosure has the beneficial effect that by calculating and counting the correlation coefficient $R_k$ between the standard deviation of temperature $\Delta T_k$ of each section of cooling stave and the standard deviation of heat load of the blast furnace $\Delta TL$, the upper cooling stave and lower cooling stave in the section that is most affected by temperature changes in the blast furnace can be respectively reflected. Further, the number of gas flow peaks of the section of cooling stave reflects the fluctuation of the gas flow at the periphery of the corresponding blast furnace. Further, based on the historical data of the number of gas flow peaks of lower part of the blast furnace PD and the number of gas flow peaks of upper part of the blast furnace PU, an optimal combination of blast furnace operating parameters is selected for the next operating stage of the blast furnace. Thus, targeted regulation of parameters that affect the gas flow at the inner periphery of the blast furnace can be performed to guide smooth running of the blast furnace and avoid abnormal blast furnace conditions caused by blindly setting the blast furnace operating parameters according to operator experience.

## BRIEF DESCRIPTION OF THE DRAWINGS

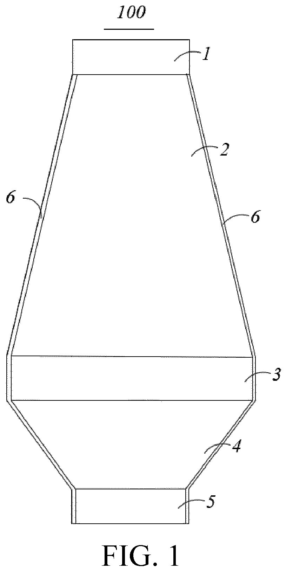

Fig. 1 is a cross-sectional structural diagram of a blast furnace top device in an embodiment of the present disclosure.

## DETAILED DESCRIPTION

The following will provide a detailed description of the present disclosure in conjunction with specific implementations shown in the accompanying drawings. However, the present disclosure is not limited by these implementations, and any structural, method or functional changes, made by those of ordinary skill in the art, based on these implementations are included in the scope of the protection of the present disclosure.

An implementation of the present disclosure provides a method for controlling stability of gas flow at the periphery of a blast furnace to achieve smooth running of the blast furnace, and avoid abnormal furnace conditions such as accretion of the blast furnace wall and the appearance of channels on the charge level.

Referring to a blast furnace top device in Fig. 1, a furnace body 100 includes a throat 1, a stack 2, a shaft 3, a belly 4 and a hearth 5 from top to bottom. A cooling stave 6 of the blast furnace covers the furnace body 100. The cooling stave 6 is divided into a total of 12 sections from bottom to top, and the 12 sections of cooling staves are numbered sequentially from bottom to top. The 1st to the 3rd sections of cooling staves cover the hearth 5, the 4th to the 5th sections of cooling staves cover the belly 4, the 6th section of the cooling stave covers the shaft 3, and the 7th to the 12th sections of cooling staves cover the stack 2. Copper cooling staves with good thermal conductivity and impact resistance are used for the cooling staves in the 1st to 9th sections, while cast iron cooling staves with good wear resistance are used in the 10th to 12th sections.

Referring to the blast furnace top device shown in Fig. 1, the steps of the control method are introduced below.

**Step: A database of blast furnace operating parameters is constructed.**

The database includes the number of gas flow peaks of lower part of the blast furnace PD, the number of gas flow peaks of upper part of the blast furnace PU, blast furnace feed, a distribution system, an air supply system and a cooling system collected in production history.

Specifically, the blast furnace feed parameters include Zn content, alkali metal content and sintered fine ore percentage in the blast furnace feed. Regulation of these parameters can avoid blast furnace wall accretion.

The distribution system parameters include a maximum tilting angle, charge level height and periphery load O/C, where O is the number of ore circles in the two outermost grades/ (the total number of ore circles × batch ore charge), C is the number of coke circles in the two outermost grades/ (the total number of coke circles × batch coke charge), and the periphery load O/C characterizes the ratio of the thickness of ore to the thickness of coke at the periphery of the blast furnace. The thickness of a charge layer and the shape of the charge level at the periphery of the blast furnace can be regulated with the parameters to affect rolling of the furnace charge and avoid formation of gas flow channels.

The air supply system includes tuyere area, tuyere length, blast volume and oxygen content. The blast flow rate and kinetic energy entering the blast furnace can be regulated with the parameters to directly affect the distribution of airflow throughout the blast furnace.

The cooling system includes an inlet water temperature and a flow rate of cooling water in the cooling stave 6. Regulation of the parameters can regulate cooling capacity of cooling water in the cooling stave 6 and further affect heat exchange in the blast furnace.

**Step: The blast furnace operating parameters satisfying a first preset condition are selected from the database to generate an instruction for setting the blast furnace operating parameters for a next operating stage.**

The first preset condition includes: the number of gas flow peaks of lower part of the blast furnace PD<a preset value PD0, and the blast furnace operating parameters corresponding to a minimum value of the number of gas flow peaks of upper part of the blast furnace PU are selected when the condition PD<PD0 is satisfied.

A statistical method for the number of gas flow peaks of lower part of the blast furnace PD and the number of gas flow peaks of upper part of the blast furnace PU is as follows:

a correlation coefficient $R_k$ between a standard deviation of temperature $\Delta T_k$ of the $k^{th}$ cooling stave and a standard deviation of heat load of the blast furnace $\Delta TL$ is calculated respectively, where k=5, 6, ..., 12;

the number of gas flow peaks, corresponding to a section of cooling stave with the highest correlation coefficient $R_k$ in the 5th to 9th sections of cooling staves, is counted as the number of gas flow peaks of lower part of the blast furnace PD; and

the number of gas flow peaks, corresponding to a section of cooling stave with the highest correlation coefficient $R_k$ in the 10th to 12th sections of cooling staves, is counted as the number of gas flow peaks of upper part of the blast furnace PU.

Cohesive zones in the blast furnace are mainly located in the areas such as the belly 4, shaft 3 and the lower areas of stack 2, which correspond to the areas of the 5th to the 9th sections of cooling staves. The distribution of the cohesive zones at the periphery of the blast furnace is reflected in the areas of the cooling staves, and the formation and dropping of slag skull are mainly concentrated in these areas. The heat load in these areas is high, and copper cooling staves with better cooling performance are used in these areas to achieve excellent cooling effects. The upper areas of the blast furnace stack 2, which correspond to the areas of the 10th to 12th sections of cooling staves, and belong to a dry zone of the blast furnace. The furnace wall in these areas mainly bears physical friction caused by drop of furnace charge and thermal expansion of the furnace charge. In addition, the distribution of gas flow passing through the cohesive zones inside the blast furnace is also reflected on the areas of the cooling staves. These areas use the cast iron cooling staves with good friction resistance to prolong the service life of the blast furnace. By calculating and counting the correlation coefficient $R_k$ between the standard deviation of temperature $\Delta T_k$ of each section of cooling stave and the standard deviation of heat load of the blast furnace $\Delta TL$, the upper cooling stave and lower cooling stave in the section that is most affected by temperature changes in the blast furnace can be respectively reflected. Further, the number of gas flow peaks of the section of cooling stave reflects the fluctuation of the gas flow at the periphery of the corresponding blast furnace. Further, based on the historical data of the number of gas flow peaks of lower part of the blast furnace PD and the number of gas flow peaks of upper part of the blast furnace PU, an optimal combination of blast furnace operating parameters is selected for the next operating stage of the blast furnace. Thus, targeted regulation of parameters that affect the gas flow at the inner periphery of the blast furnace can be performed to guide smooth running of the blast furnace and avoid abnormal blast furnace conditions caused by blindly setting the blast furnace operating parameters according to operator experience.

Specifically, in this implementation, the step "constructing a database of blast furnace operating parameters" specifically includes the following: the statistically obtained number of gas flow peaks of lower part of the blast furnace PD are divided into different grades in order of magnitude, to obtain the number of gas flow peaks of lower part of the blast furnace PD in different ranges, and average values of the blast furnace operating parameters in a same grade is taken.

The first preset condition includes: a maximum value in a range of the grade of the number of gas flow peaks of lower part of the blast furnace PD<a preset value PD0, and the average value of the blast furnace operating parameters corresponding to the minimum value of the number of gas flow peaks of upper part of the blast furnace PU is selected when the condition is satisfied.

Specifically, the correlation coefficient $R_k$ between the standard deviation of temperature $\Delta T_k$ of the $k^{th}$ cooling stave and the standard deviation of heat load of the blast furnace $\Delta TL$ is calculated by the following equation:

$$R_k = \frac{Cov(\Delta T_k, \Delta TL)}{\sqrt{Var(\Delta T_k) \cdot Var(\Delta TL)}},$$

Where $Cov(\Delta T_k, \Delta TL)$ is a sample covariance of $\Delta T_k$ and $\Delta TL$ in several units of time within a preset time, $Var(\Delta T_k)$ is a variance of $\Delta T_k$ in several units of time within a preset time, and $Var(\Delta TL)$ is a variance of $\Delta TL$ in several units of time within a preset time.

Further, the standard deviation of temperature of the $k^{th}$ cooling stave $\Delta T_k$ is calculated by the following equation:

$$\Delta T_k = \sum_{j=1}^{m} \sqrt{\frac{1}{n-1} \sum_{i=1}^{n} (T_i - \overline{T})^2},$$

where m is the number of temperature collection points on the $k^{th}$ cooling stave, j=1, ..., m, Ti is the $i^{th}$ temperature data of a temperature collection point on the $k^{th}$ cooling stave, n is the number of temperature samples in unit time, i=1, ..., n, and $\overline{T}$ is an average temperature in unit time.

Specifically, the temperature of the cooling stave 6 is collected by thermocouples arranged on the cooling stave 6, and in this embodiment, m thermocouples are installed on each section of cooling stave, which means that each section of cooling stave has m temperature collection points.

During the temperature collection process, a sample dataset is subjected to removal of outliers and removal of data under unstable working conditions and other interference temperature data to obtain a final processed sample dataset, thereby removing abnormal data that may interfere with the final detection results, and providing precise regulation over the operation of the blast furnace.

In this implementation, the outliers include continuous multiple constant temperature data, and temperature data outside a preset range ($T_{min}$, $T_{max}$); and the data under unstable working conditions include temperature data in 2 hours before opening, during opening and in 2 hours after closing of a back-drafting valve.

Further, the standard deviation of heat load of the cooling stave 6 $\Delta TL$ is calculated by the following equation:

$$\Delta TL = \sqrt{\frac{1}{n-1} \sum_{i=1}^{n} (TL_i - \overline{TL})^2},$$

where $TL_i$ is the heat load of the blast furnace when the ith temperature data is collected, n is the number of heat load samples in unit time, i=1, ..., n, and $\overline{TL}$ is average heat load in unit time.

The calculation formula for the heat load of the blast furnace $TL_i$ is calculated by the following equation:

$$TL_i = c \cdot F(T_{out} - T_{in}),$$

where c is specific heat capacity of water, F is the flow rate of cooling water in the cooling stave 6, $T_{out}$ is the outlet water temperature of the cooling stave 6, and $T_{in}$ is the inlet water temperature of the cooling stave 6.

The correlation coefficient $R_k$ between the standard deviation of temperature $\Delta T_k$ of each section of cooling stave and the standard deviation of heat load of the blast furnace $\Delta TL$ characterizes the fluctuation of temperature of each section of cooling stave and the quantity of heat exchange of the cooling stave 6 of the entire blast furnace body 100.

Further, in the method for controlling stability of gas flow at the periphery of a blast furnace, the statistical method for the number of gas flow peaks includes the following:

multiple temperature data of the cooling stave 6 are collected, and the multiple temperature data are sorted by collection time;
interference temperature data are removed from the multiple temperature data, and several analytical temperature data are determined;
moving average processing is performed on respective analytical temperature data in order according to the determination order of the several analytical temperature data; and
the number of gas flow peaks is counted based on the respective analytical temperature data $T_p$ subjected to the moving average processing, and the temperature data satisfying both a second preset condition and a third preset condition is defined as one gas flow peak, where the number of gas flow peaks of each section of cooling stave is a sum of the number of gas flow peaks at multiple temperature collection points on the cooling stave in a preset time.

The second preset condition is: $T_p > T_{p-1}$ and $T_p < T_{p+1}$, where $T_{p-1}$, $T_p$ and $T_{p+1}$ are the (p-1)th pth and (p+1)th analytical temperature data respectively.

The third preset condition is: the analytical temperature data of the 5th to 9th cooling staves satisfy $T_p/\overline{T} > 1.05$, or the analytical temperature data of the 10th to 12th cooling staves satisfy $T_p/\overline{T} > 1$, where $\overline{T}$ is an average temperature in unit time.

The number of gas flow peaks of lower part of the blast furnace PD is obtained by processing the temperature data of the section of cooling stave with the highest correlation coefficient $R_k$ in the 5th to 9th sections of cooling staves by the above method. The third preset condition satisfies the following: the analytical temperature data of the 5th to 9th sections of cooling staves satisfy $T_p/\overline{T} > 1.05$. That is, a gas flow peak refers to the analytical temperature data being at least greater than the average value in unit time and greater than the previous and following adjacent analytical temperature data.

The number of gas flow peaks of upper part of the blast furnace PU is obtained by processing the temperature data of the section of cooling stave with the highest correlation coefficient $R_k$ in the 10th to 12th sections of cooling staves by the above method. The third preset condition satisfies the following: the analytical temperature data of the 10th to 12th sections of cooling staves satisfy $T_p/\overline{T} > 1$. That is, a gas flow peak refers to the analytical temperature data being greater than the average value in unit time and greater than the previous and following adjacent analytical temperature data.

In this way, the number of gas flow peaks reflects the fluctuation of temperature of the cooling stave 6 within a preset time. Based on the number of gas flow peaks of the upper cooling stave and lower cooling stave in the section that is most affected by temperature changes in the blast furnace, and according to history data, an appropriate range of the number of gas flow peaks of lower part of the blast furnace PD and the number of gas flow peaks of upper part of the blast furnace PU is selected for regulating and guiding the blast furnace operating parameters.

Further, the moving average processing includes the following:

a moving window of a preset step size is created, and according to the set step size, starting from a first temperature data among the several analytical temperature data, forward moving processing is performed in the order of collection time until a last temperature data enters the moving window; and
after each time of moving, an average value of temperature data in the moving window is taken as the analytical temperature data of an intermediate collection point in the moving window, in order to obtain several analytical temperature data after several times of moving.

By means of the moving average processing, a smooth and regular curve of temperature changes can be obtained, thereby eliminating burrs, counting and quantifying the fluctuation of temperature, i.e. the gas flow peaks, and further establishing a quantitative relationship between the temperature of the cooling stave 6 and the gas flow at the periphery of the blast furnace.

Further, the interference temperature data include: continuous multiple constant temperature data, temperature data outside a preset range ($T_{min}$, $T_{max}$), as well as temperature data in 2 hours before opening, during opening and in 2 hours after closing of a back-drafting valve. The temperature data are subjected to removal of outliers and removal of data under unstable working conditions and other interference temperature data, thereby removing abnormal data that may interfere with the final detection results, and providing precise regulation over the operation of the blast furnace.

The method for controlling stability of gas flow at the periphery of a blast furnace of the present disclosure is further illustrated through a specific embodiment as follows.

The temperature of the cooling stave 6 is collected by the m thermocouples arranged on each section of cooling stave every 2 minutes, to collect multiple temperature data of the 5th to 12th sections of cooling staves. The multiple temperature data are sorted by collection time.

Interference temperature data are removed from the multiple temperature data, and several analytical temperature data are determined. The interference temperature data include: continuous multiple constant temperature data, temperature data outside a preset range ($T_{min}$, $T_{max}$), as well as temperature data in 2 hours before opening, during opening and in 2 hours after closing of a back-drafting valve.

Moving average processing is performed on respective analytical temperature data in order according to the determination order of the several analytical temperature data. Specifically, a moving window with a preset step size of 2 minutes is created, and the moving interval of the moving window is 22 minutes, which means the moving window includes 11 temperature data. According to the set step size, starting from the first temperature data among the several analytical temperature data, forward moving processing is performed in the order of collection time until the last temperature data enters the moving window. After each time of moving, the average value of temperature data in the moving window is taken as the analytical temperature data of the 6th temperature collection point in the moving window, and several analytical temperature data $T_p$ are obtained after 5 times of moving.

The number of gas flow peaks is counted based on respective analytical temperature data $T_p$ subjected to the moving average processing. In the 5th to 9th sections of cooling staves, temperature data satisfying $T_p > T_{p-1}$, $T_p < T_{p+1}$, and $T_p/\overline{T} > 1.05$ is considered as a gas flow peak. In the 10th to 12th sections of cooling staves, temperature data satisfying $T_p > T_{p-1}$, $T_p < T_{p+1}$, and $T_p/\overline{T} > 1.05$ is considered as a gas flow peak. $T_{p-1}$, $T_p$ and $T_{p+1}$ are the $(p-1)$th, $p$th and $(p+1)$th analytical temperature data respectively, and $\overline{T}$ is the average temperature in unit time. The unit time is 1 h. The number of gas flow peaks of each section of cooling stave is the sum of the number of gas flow peaks counted at m thermocouples on that section of cooling stave in a day.

The temperature of each section of cooling stave is collected by the m thermocouples arranged on each section of cooling stave every 2 minutes. During the temperature collection process, a sample dataset is subjected to removal of outliers and removal of data under unstable working conditions and other interference temperature data to obtain a final processed sample dataset. The outliers include continuous multiple constant temperature data, and temperature data outside a preset range ($T_{min}$, $T_{max}$); and the data under unstable working conditions include temperature data in 2 hours before opening, during opening and in 2 hours after closing of a back-drafting valve.

The standard deviation of temperature of the $k$th cooling stave $\Delta T_k$ is calculated,

$$\Delta T_k = \sum_{j=1}^{m} \sqrt{\frac{1}{n-1} \sum_{i=1}^{n} (T_i - \overline{T})^2} \,,$$

where m is the number of temperature collection points on the $k$th cooling stave, $j=1, ..., m$, $T_i$ is the $i$th temperature data of a temperature collection point on the $k$th cooling stave, n is the number of temperature samples in unit time, $i=1, ..., n$, $\overline{T}$ is the average temperature in unit time, and the unit time is 1 hour.

The calculation formula for the heat load of the blast furnace $TL_i$ is $TL_i = c \cdot F(T_{out} - T_{in})$, where c is specific heat capacity of water, F is the flow rate of cooling water in the cooling stave 6, $T_{out}$ is the outlet water temperature of the cooling stave 6, and $T_{in}$ is the inlet water temperature of the cooling stave 6.

The standard deviation of heat load of the cooling stave 6, $\Delta TL$ is calculated,

$$\Delta TL = \sqrt{\frac{1}{n-1}\sum_{i=1}^{n}(TL_i - \overline{TL})^2} \, ,$$

where $TL_i$ is the heat load of the blast furnace when the $i$th temperature data is collected, $n$ is the number of heat load samples in unit time, $i=1, ..., n$, and $\overline{TL}$ is the average heat load in 1 hour.

A correlation coefficient $R_k$ between a standard deviation of temperature $\Delta T_k$ of the $k$th cooling stave and a standard deviation of heat load of the blast furnace $\Delta TL$ is calculated,

$$R_k = \frac{Cov(\Delta T_k, \Delta TL)}{\sqrt{Var(\Delta T_k) \cdot Var(\Delta TL)}} \, ,$$

Where $Cov(\Delta T_k, \Delta TL)$ is the sample covariance of $\Delta T_k$ and $\Delta TL$ in several units of time within a preset time, $Var(\Delta T_k)$ is the variance of $\Delta T_k$ in several units of time within a preset time, $Var(\Delta TL)$ is the variance of $\Delta TL$ in several units of time within a preset time, the preset time is 24 hours, and the unit time is 1 hour.

The correlation coefficients $R_k$ of the 5th and 12th sections of cooling staves are counted respectively. The number of gas flow peaks of lower part of the blast furnace PD is the number of gas flow peaks of the section of cooling stave with the highest correlation coefficient $R_k$ in the 5th to 9th sections of cooling staves. The number of gas flow peaks of upper part of the blast furnace PU is the number of gas flow peaks of the section of cooling stave with the highest correlation coefficient $R_k$ in the 10th to 12th sections of cooling staves.

A database of blast furnace operating parameters is constructed, and the database includes the number of gas flow peaks of lower part of the blast furnace PD, the number of gas flow peaks of upper part of the blast furnace PU, blast furnace feed, a distribution system, an air supply system and a cooling system collected in production history.

Specifically, the blast furnace feed parameters include Zn content, alkali metal content and sintered fine ore percentage in the blast furnace feed. The distribution system parameters include the maximum tilting angle, charge level height and periphery load O/C. The air supply system includes tuyere area, tuyere length, blast volume and oxygen content. The cooling system includes the inlet water temperature and the flow rate of cooling water in the cooling stave 6.

The statistically obtained number of gas flow peaks of lower part of the blast furnace PD are divided into different grades in order of magnitude, to obtain the number of gas flow peaks of lower part of the blast furnace PD in 5 different ranges, and the average value of the blast furnace operating parameters in the same grade is taken, to obtain the database of blast furnace operating parameters as shown in Table 1.

Table 1

| Grade | PD | PU | O/C | Charge level height/m | Maximum tilting angle/° | Tuyerearea 1m2 | Tuyere length /mm | Blast volume /Nm$^3$ | Oxygen content / Nm$^3$/h | Sintered fine ore /% | Zn (kg/t) | Alkali metals (kg/t) | Flow rate of cooling water (m$^3$/h) | Inlet water temperature 1°C |
|---|---|---|---|---|---|---|---|---|---|---|---|---|---|---|
| 1 | <2.85 | 14.9 | 1.98 | 1.4 | 46.2 | 0.546 | 630 | 7700 | 50000 | 23 | 0.08 | 2.6 | 6894 | 33.4 |
| 2 | 2.85-4.3 | 15.2 | 2.16 | 1.4 | 46.5 | 0.546 | 630 | 7750 | 48000 | 23 | 0.08 | 2.6 | 6884 | 34 |
| 3 | 4.3-5.7 | 13.9 | 2.36 | 1.4 | 46.4 | 0.546 | 630 | 7800 | 49000 | 22.97 | 0.08 | 2.6 | 6827 | 35 |
| 4 | 5.7-7.1 | 13.8 | 2.59 | 1.4 | 46.7 | 0.546 | 630 | 7770 | 48500 | 22.4 | 0.08 | 2.6 | 6906 | 34.6 |
| 5 | >7.1 | 12.9 | 2.48 | 1.4 | 45.75 | 0.546 | 630 | 7790 | 48900 | 23 | 0.08 | 2.6 | 6781 | 36.1 |

In this embodiment, PD0 is 5.7, so the PD values in the 1st, 2nd and 3rd grades satisfy the first preset condition. Further, the blast furnace operating parameters with the lowest PU value in the 1st, 2nd and 3rd grades are selected, that is, the blast furnace operating parameters corresponding to the 3rd grade are selected to generate an instruction for setting the blast furnace operating parameters for the next operating stage, thereby effectively maintaining the stability of gas flow at the periphery of the blast furnace and achieving stable and smooth running of the blast furnace.

In summary, compared with the prior art, the method for controlling stability of gas flow at the periphery of a blast furnace of the present disclosure has the following beneficial effects: By calculating and counting the correlation coefficient $R_k$ between the standard deviation of temperature $\Delta T_k$ of each section of cooling stave and the standard deviation of heat load of the blast furnace $\Delta TL$, the upper cooling stave and lower cooling stave in the section that is most affected by temperature changes in the blast furnace can be respectively reflected. Further, the number of gas flow peaks of the section of cooling stave reflects the fluctuation of the gas flow at the periphery of the corresponding blast furnace. Further, based on the historical data of the number of gas flow peaks of lower part of the blast furnace PD and the number of gas flow peaks of upper part of the blast furnace PU, an optimal combination of blast furnace operating parameters is selected for the next operating stage of the blast furnace. Thus, targeted regulation of parameters that affect the gas flow at the inner periphery of the blast furnace can be performed to guide smooth running of the blast furnace and avoid abnormal blast furnace conditions caused by blindly setting the blast furnace operating parameters according to operator experience.

It should be understood that although the description is provided according to the implementations, not each implementation only includes one independent technical solution, and the narrative mode in the description is only for clarity. Those skilled in the art should consider the description as a whole, and the technical solutions in the implementations can also be appropriately combined to form other implementations that can be understood by those skilled in the art.

The series of detailed descriptions listed above are only specific illustrations for feasible implementations of the present disclosure, and are not intended to limit the scope of protection of the present disclosure. Any equivalent implementations or changes that do not depart from the craft and spirit of the present disclosure should be included in the scope of protection of the present disclosure.

**Claims**

1. A method for controlling stability of gas flow at the periphery of a blast furnace, comprising the following steps:

   constructing a database of blast furnace operating parameters, the database comprising the number of gas flow peaks of lower part of the blast furnace PD, the number of gas flow peaks of upper part of the blast furnace PU, blast furnace feed, a distribution system, an air supply system and a cooling system collected in production history; and
   selecting the blast furnace operating parameters satisfying a first preset condition from the database to generate an instruction for setting the blast furnace operating parameters for a next operating stage;
   wherein the first preset condition comprises: the number of gas flow peaks of lower part of the blast furnace PD<a preset value PD0, and the blast furnace operating parameters corresponding to a minimum value of the number of gas flow peaks of upper part of the blast furnace PU are selected when the condition PD<PD0 is satisfied;
   wherein a statistical method for the number of gas flow peaks of lower part of the blast furnace PD and the number of gas flow peaks of upper part of the blast furnace PU is as follows:

   calculating a correlation coefficient $R_k$ between a standard deviation of temperature $\Delta T_k$ of the $k^{th}$ cooling stave and a standard deviation of heat load of the blast furnace $\Delta TL$ respectively, wherein k=5, 6, ..., 12;
   counting the number of gas flow peaks, corresponding to a section of cooling stave with the highest correlation coefficient $R_k$ in the 5th to 9th sections of cooling staves, as the number of gas flow peaks of lower part of the blast furnace PD; and
   counting the number of gas flow peaks, corresponding to a section of cooling stave with the highest correlation coefficient $R_k$ in the 10th to 12th sections of cooling staves, as the number of gas flow peaks of upper part of the blast furnace PU.

2. The method for controlling stability of gas flow at the periphery of a blast furnace according to claim 1, wherein the step "constructing a database of blast furnace operating parameters" specifically comprises: dividing the statistically obtained number of gas flow peaks of lower part of the blast furnace PD into different grades in order of magnitude, to obtain the number of gas flow peaks of lower part of the blast furnace PD in different ranges, and taking average values of the blast furnace operating parameters in a same grade; and

the first preset condition comprises: a maximum value in a range of the grade of the number of gas flow peaks of lower part of the blast furnace PD<a preset value PD0, and the average value of the blast furnace operating parameters corresponding to the minimum value of the number of gas flow peaks of upper part of the blast furnace PU is selected when the condition is satisfied.

3. The method for controlling stability of gas flow at the periphery of a blast furnace according to claim 1, wherein the correlation coefficient $R_k$ between the standard deviation of temperature $\Delta T_k$ of the $k^{th}$ cooling stave and the standard deviation of heat load of the blast furnace $\Delta TL$ is calculated by the following equation:

$$R_k = \frac{Cov(\Delta T_k, \Delta TL)}{\sqrt{Var(\Delta T_k) \cdot Var(\Delta TL)}},$$

wherein $Cov(\Delta T_k, \Delta TL)$ is a sample covariance of $\Delta T_k$ and $\Delta TL$ in several units of time within a preset time, $Var(\Delta T_k)$ is a variance of $\Delta T_k$ in several units of time within a preset time, and $Var(\Delta TL)$ is a variance of $\Delta TL$ in several units of time within a preset time.

4. The method for controlling stability of gas flow at the periphery of a blast furnace according to claim 3, wherein the standard deviation of temperature of the $k^{th}$ cooling stave $\Delta T_k$ is calculated by the following equation:

$$\Delta T_k = \sum_{j=1}^{m} \sqrt{\frac{1}{n-1} \sum_{i=1}^{n} (T_i - \overline{T})^2},$$

wherein m is the number of temperature collection points on the $k^{th}$ cooling stave, j=1, ..., m, $T_i$ is the $i^{th}$ temperature data of a temperature collection point on the $k^{th}$ cooling stave, n is the number of temperature samples in unit time, i=1, ..., n, and $\overline{T}$ is an average temperature in unit time.

5. The method for controlling stability of gas flow at the periphery of a blast furnace according to claim 4, wherein the temperature of the cooling stave is collected by thermocouples arranged on the cooling stave, and a sample dataset is subjected to removal of outliers and removal of data under unstable working conditions to obtain a final processed sample dataset.

6. The method for controlling stability of gas flow at the periphery of a blast furnace according to claim 3, wherein the standard deviation of heat load of the cooling stave,

$$\Delta TL = \sqrt{\frac{1}{n-1} \sum_{i=1}^{n} (TL_i - \overline{TL})^2},$$

wherein $TL_i$ is the heat load of the blast furnace when the $i^{th}$ temperature data is collected, n is the number of heat load samples in unit time, i=1, ..., n, and $\overline{TL}$ is average heat load in unit time.

7. The method for controlling stability of gas flow at the periphery of a blast furnace according to claim 6, wherein the heat load of the blast furnace $TL_i = c \cdot F(T_{out} - T_{in})$,
wherein c is specific heat capacity of water, F is a flow rate of cooling water in the cooling stave, $T_{out}$ is an outlet water temperature of the cooling stave, and $T_{in}$ is an inlet water temperature of the cooling stave.

8. The method for controlling stability of gas flow at the periphery of a blast furnace according to claim 1, wherein the statistical method for the number of gas flow peaks comprises:

collecting multiple temperature data of the cooling stave, the multiple temperature data being sorted by collection time;
removing interference temperature data from the multiple temperature data, and determining several analytical temperature data;

performing moving average processing on respective analytical temperature data in order according to the determination order of the several analytical temperature data; and

counting the number of gas flow peaks based on the respective analytical temperature data $T_p$ subjected to the moving average processing, and defining the temperature data satisfying both a second preset condition and a third preset condition as one gas flow peak, wherein the number of gas flow peaks of each section of cooling stave is a sum of the number of gas flow peaks at multiple temperature collection points on the cooling stave in a preset time;

the second preset condition is: $T_p > T_{p-1}$ and $T_p < T_{p+1}$, wherein $T_{p-1}$, $T_p$ and $T_{p+1}$ are the $(p-1)^{th}$, $p^{th}$ and $(p+1)^{th}$ analytical temperature data respectively; and

the third preset condition is: the analytical temperature data of the $5^{th}$ to $9^{th}$ cooling staves satisfy $T_p/\overline{T} > 1.05$, or the analytical temperature data of the $10^{th}$ to $12^{th}$ cooling staves satisfy $T_p/\overline{T} > 1$, wherein $\overline{T}$ is an average temperature in unit time.

9. The method for controlling stability of gas flow at the periphery of a blast furnace according to claim 8, wherein the moving average processing comprises:

creating a moving window of a preset step size, and according to the set step size, starting from a first temperature data among the several analytical temperature data, moving forward in the order of collection time until a last temperature data enters the moving window; and

after each time of moving, taking an average value of temperature data in the moving window as the analytical temperature data of an intermediate collection point in the moving window, in order to obtain several analytical temperature data after several times of moving.

10. The method for controlling stability of gas flow at the periphery of a blast furnace according to claim 8, wherein the interference temperature data comprise: continuous multiple constant temperature data, temperature data outside a preset range ($T_{min}$, $T_{max}$), as well as temperature data in 2 hours before opening, during opening and in 2 hours after closing of a back-drafting valve.

11. The method for controlling stability of gas flow at the periphery of a blast furnace according to claim 1, wherein the blast furnace feed parameters comprise Zn content, alkali metal content and sintered fine ore percentage in the blast furnace feed;

the distribution system parameters comprise a maximum tilting angle, charge level height and periphery load O/C, wherein O is the number of ore circles in the two outermost grades/ (the total number of ore circles $\times$ batch ore charge), and C is the number of coke circles in the two outermost grades/ (the total number of coke circles $\times$ batch coke charge);

the air supply system comprises tuyere area, tuyere length, blast volume and oxygen content; and

the cooling system comprises an inlet water temperature and a flow rate of cooling water in the cooling stave.

FIG. 1

## INTERNATIONAL SEARCH REPORT

International application No.

**PCT/CN2022/078015**

### A. CLASSIFICATION OF SUBJECT MATTER

C21B 7/10(2006.01)i; C21B 7/00(2006.01)i; G06F 119/08(2020.01)i; G06F 119/00(2020.01)i

According to International Patent Classification (IPC) or to both national classification and IPC

### B. FIELDS SEARCHED

Minimum documentation searched (classification system followed by classification symbols)

C21B; G06F

Documentation searched other than minimum documentation to the extent that such documents are included in the fields searched

Electronic data base consulted during the international search (name of data base and, where practicable, search terms used)

CNKI, CNABS, DWPI, SIPOABS, CNTXT, ISI WEB OF SCIENCE: 高炉, 冶炼炉, 气流, 冷却, 制冷, 降温, 温度, blast, furnace, smelt+, air, flow, current, cool+, lower, temperature

### C. DOCUMENTS CONSIDERED TO BE RELEVANT

| Category* | Citation of document, with indication, where appropriate, of the relevant passages | Relevant to claim No. |
|---|---|---|
| A | CN 112668148 A (PANGANG GROUP RESEARCH INSTITUTE CO., LTD.) 16 April 2021 (2021-04-16)<br>description, paragraphs [0005]-[0016] and [0049]-[0052] | 1-11 |
| A | CN 113293247 A (DAZHOU IRON & STEEL GROUP CO., LTD.) 24 August 2021 (2021-08-24)<br>entire document | 1-11 |
| A | CN 113637814 A (JIANGSU SHAGANG INSTITUTE OF RESEARCH OF IRON AND STEEL et al.) 12 November 2021 (2021-11-12)<br>entire document | 1-11 |
| A | CN 102021260 A (ANGANG STEEL CO., LTD.) 20 April 2011 (2011-04-20)<br>entire document | 1-11 |
| A | KR 20010002169 A (POHANG IRON & STEEL CO., LTD.) 05 January 2001 (2001-01-05)<br>entire document | 1-11 |
| A | JP 2015074794 A (JFE STEEL CORP.) 20 April 2015 (2015-04-20)<br>entire document | 1-11 |

☐ Further documents are listed in the continuation of Box C.      ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **09 September 2022** | **29 September 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2022/078015** |

| Patent document cited in search report | | | Publication date (day/month/year) | Patent family member(s) | | | Publication date (day/month/year) |
| --- | --- | --- | --- | --- | --- | --- | --- |
| CN | 112668148 | A | 16 April 2021 | CN | 112668148 | B | 29 July 2022 |
| CN | 113293247 | A | 24 August 2021 | CN | 214830443 | U | 23 November 2021 |
| CN | 113637814 | A | 12 November 2021 | None | | | |
| CN | 102021260 | A | 20 April 2011 | None | | | |
| KR | 20010002169 | A | 05 January 2001 | None | | | |
| JP | 2015074794 | A | 20 April 2015 | JP | 5983951 | B2 | 06 September 2016 |

Form PCT/ISA/210 (patent family annex) (January 2015)